# EUROPEAN PATENT APPLICATION

(11) **EP 3 798 115 A1**
(43) Date of publication of application: **31.03.2021**
(21) Application number: 19199667.7
(22) Date of filing: 25.09.2019
(51) Int. Cl.: B64C 3/18, B64C 3/20

(54) **WING RIB**

(71) Applicant: Formtech Composites Ltd., Abingdon, Oxfordshire OX14 4SD (GB)
(72) Inventor: Tritschler, Dr. Hans-Joachim, Abingdon, Oxfordshire OX14 4SD (GB)
(74) Representative: Keil & Schaafhausen Patentanwälte PartGmbB

(57) **Abstract**

The invention refers to a wing rib (1) comprising multiple lattices (3) and a periphery (2). Each lattice (3) is an angled profile made of a fiber-reinforced resin composite and the periphery (2) comprises at least one angled profile made of a fiber-reinforced resin composite. The angled profiles of lattices (3) and the periphery (2) partially overlap and are connected to each other by being cured together.

## Description

The present invention refers to a fiber-reinforced composite wing rib.

In an aircraft, ribs are the structural cross-pieces that combine with spars and, optionally, stringers to make up the framework of the wing. The ribs typically attach to the main spar, and by being repeated at frequent intervals, form a skeletal shape for the wing. Usually, ribs extend from the wing leading edge to the rear spar or to the trailing edge of the wing and incorporate the airfoil shape of the wing. In conventional, contemporary aircraft structures the wing skins are stiff and define the wing's shape while being supported by the ribs. In contrast, the invented wing rib must support an ultra-thin, flexible wing skin. The ribs are therefore defining the wing shape. The skin adopts the shape of the ribs when stretched over the ribs. Known wing ribs are usually manufactured from either wood, metal or composite.

However, due to the benefits of high stiffness and low weight, fiber-reinforced composite components are used in modern aircrafts, e.g. carbon fiber reinforced plastic wing components. A carbon fiber reinforced plastic rib typically consists of an outer frame, hereinafter referred to as the periphery, which incorporates the airfoil shape of the wing, and internal framework webs, hereinafter referred to as the lattices.

The weight requirements of the aircraft have led to rib structures that are on the limit of manufacturability. As a result, no readily available production method other than manual fabrication can be found on the market.

The profiles that both, lattice and periphery, for a known carbon fiber reinforced plastic wing rib consist of, are substantially U-shaped such that the main bending moment acts around an axis parallel to the middle section (web). The benefit of a U-shape in this use case is that the expected failure mode is a global kinking of a lattice beam and the centre section provides a large volume of material away from the centre axis to provide a lever arm and, as a result, a good bending resistance, relative to other beam shapes. The downside of the U-shape are the large flanges, which are necessary to create the lever arm of the centre section. The flanges are susceptible to local buckling, which reduces the overall resistance against kinking of the lattice beam. Additionally, U-shaped profiles are creating challenges during manufacturing. The undercuts created by the U-shaped lattice and periphery dictate a labour intensive manufacturing strategy.

It is an object of the present invention to reduce weight and costs of a wing rib while maintaining high structural stability.

This object is solved according to claim 1 with an optimized design of lattice and periphery strips.

According to the present invention a wing rib comprises at least one lattice strip of a pre-impregnated fiber-reinforced resin composite and at least one periphery strip of a pre-impregnated fiber-reinforced resin composite. A wing rib may comprise several lattices each being made from one or more strips and a periphery made from one or more strips. A strip is typically a flat strip with a longitudinal axis and being relatively thin and small in width compared with the length of the strip. The pre-impregnated fiber-reinforced resin composite may comprise unidirectional fibers, e.g. carbon fibers, embedded within a matrix of resin, e.g. an epoxy resin which cures when applying heat. To give the strips the desired design, the strips are pre-formed in at least one mould or on at least one mounting jig and the resin is partially cured.

The pre-formed strip is than transformed into an U-shaped profile with a web and two flanges extending from the web.

Typically a wing rib comprises multiple strips. In other words, the periphery strip surrounds the lattice strips such that the lattice strips form a framework within the periphery to form a wing rib. The periphery strip at least abuts the lattice strips and may partially overlap with one or more lattice strips.

Furthermore, at least one socket may be assembled into the wing rib for connecting the rib with a spar of the wing. According to the present invention each lattice is an angled profile made of a fiber-reinforced resin composite and the periphery comprises at least one angled profile made of a fiber-reinforced resin composite wherein the angled profiles of the lattices and the periphery preferably partially overlap and are connected to each other by being cured together. This reduces weight and adds structural stability to the rib.

According to an embodiment of the invention, the lattices and the periphery may have the same angled profile. For example, the lattices and the periphery may each have an U-shaped profile with a central web and two flanges extending, e.g. perpendicular, from the web.

As an alternative, the lattices and the periphery may have different angled profiles. For example, the lattices may be made of two angled profiles, each having a longitudinally extending web and two flanges, e.g. of different lengths, extending substantially perpendicular to the web, wherein the flanges of the profiles are connected with each other to form a skewed I-beam. According to a further example, the periphery may be made of two angled profiles, each having a longitudinally extending web and one flange extending substantially perpendicular to the web, wherein the webs of the profiles are connected with each other to form a T-beam.

The above described improved design of the lattices and periphery of the rib have the benefit of a weight reduction and performance gain, while improving the manufacturability.

Non-limiting, exemplary embodiments of the invention will now be described with reference to the accompanying drawings, in which:
- Figure 1: schematically shows a perspective view of a portion of a wing rib using the strip profile of Figures 2a-b;
- Figures 2a-b: schematically show a sectional and a 3D-view of a strip profile according to a first embodiment;
- Figures 3a-b: schematically show a sectional and a 3D-view of a strip profile according to a second embodiment;
- Figures 4a-b: schematically show a sectional and a 3D-view of a strip profile according to a third embodiment; and
- Figure 5: shows a perspective view of a portion of a wing rib using the strip profile of Figures 3a-b.

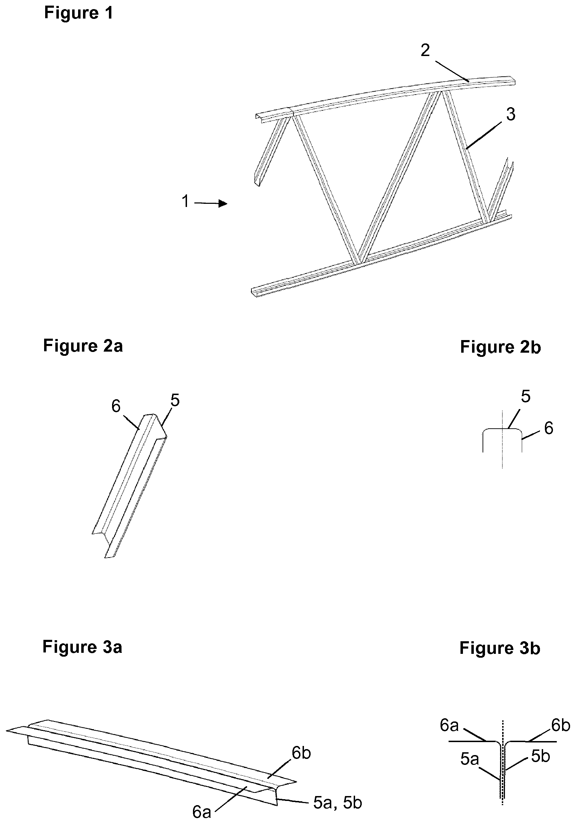

Referring to Figure 1, a wing rib 1 is partially shown. The wing rib 1 comprises an outer periphery 2 and a framework of multiple lattices 3. Further, the wing rib 1 depicted in Figure 1 may comprises a socket (not shown) for attaching the wing rib 1 to a spar (not shown) of a wing for an airplane.

The periphery 2 and of the lattices 3 are each formed from one or more strips of a pre-impregnated fiber-reinforced resin composite, for example strips of unidirectional carbon fibers embedded in an epoxy matrix. The periphery 2 and the lattices 3 may have an identical shape in cross section or may have different shapes in cross section. Figures 2 to 4 depict three different exemplary embodiments of a cross section suitable for the periphery 2 and/or the lattices 3. The dotted line in Figures 2 to 4 corresponds to the plane xz in Figure 1.

In Figures 2a-b the profile has a U-shape with a web 5 and two lateral flanges 6 extending substantially perpendicular from the web 5. The profile depicted in Figures 2a-b may be pre-formed from a strip using it to as depicted in Figure 11. The profile depicted in Figures 2a-b is suitable for the periphery 2 and for the lattices 3.

In Figures 3a-b the profile has a T-shape and consists of two portions each having a web 5a, 5b and a flange 6a, 6b extending substantially perpendicular from the respective web 5a, 5b wherein the webs 5a and 5b are attached to each other to form the T-shaped profile. The profile of Figures 3a-b is for example suitable for the periphery 2.

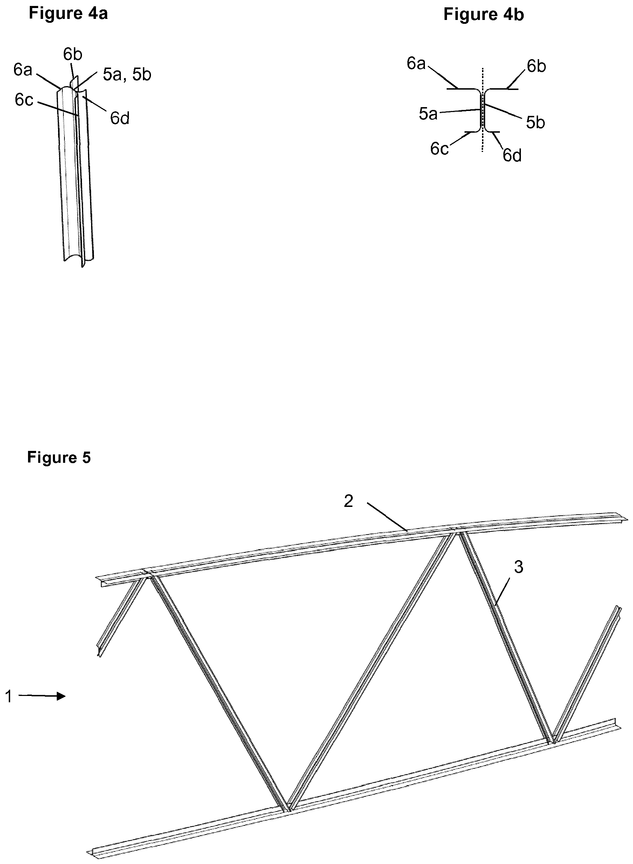

In Figures 4a-b the profile has a skewed I-beam shape and consists of two portions each having a web 5a, 5b and two lateral flanges 6a, 6b extending substantially perpendicular from the respective web 5a, 5b. Again, the webs 5a and 5b are attached to each other such that the flanges 6a, 6b face away from each other. In the embodiment depicted in Figures 4a-b the lower flanges are shorter compared with the upper flanges. This configuration allows to award more material to the side of higher stress, thus making for a skewed material distribution. This profile is for example suitable for the lattices 3.

A wing rib 1 similar to Figure 1 is partially shown in Figure 5, using the strip profile shown in Figures 3a-b.

## Claims

1. Wing rib (1) comprising multiple lattices (3) and a periphery (2), **characterized in that** each lattice (3) is an angled profile made of a fiber-reinforced resin composite, and that the periphery (2) comprises at least one angled profile made of a fiber-reinforced resin composite, wherein the angled profiles of lattices (3) and the periphery (2) partially overlap and are connected to each other by being cured together.

2. Wing rib (1) according to claim 1, wherein the lattices (3) and the periphery (2) have the same angled profile.

3. Wing rib (1) according to claim 2, wherein the lattices (3) and the periphery (2) have an U-shaped profile.

4. Wing rib (1) according to claim 1, wherein the lattices (3) and the periphery (2) have different angled profiles.

5. Wing rib (1) according to claim 4, wherein the lattices (3) are made of two angled profiles, each having a longitudinally extending web (5a, 5b) and two flanges (6a, 6b) of different lengths, extending substantially perpendicular to the web (5a, 5b), wherein the webs (5a, 5b) of the profiles are connected with each other to form a skewed I-beam.

6. Wing rib (1) according to claim 4, wherein the periphery (2) is made of two angled profiles, each having a longitudinally extending web (5a, 5b) and one flange (6a, 6b) extending substantially perpendicular to the web (5a, 5b), wherein the webs (5a, 5b) of the profiles are connected with each other to form a T-beam.

7. Wing rib according to any of the preceding claims further comprising at least one socket that is assembled into the wing rib (1).
